# EUROPÄISCHE PATENTSCHRIFT

(11) **EP 1 607 259 B1**
(45) Veröffentlichungstag und Bekanntmachung des Hinweises auf die Patenterteilung: **15.04.2009**
(21) Anmeldenummer: 05011965.0
(22) Anmeldetag: 03.06.2005
(51) Int. Cl.: B60J 7/20

(54) **Abdeckeinheit mit einem verschwenkbaren Verdeckkastendeckel für einen Verdeckkasten eines Fahrzeugs**
Cover unit with a pivotable lid for top storage compartment for vehicle
Unité pour couvrir avec un couvercle pivotable pour compartiment de rangement de toit de véhicule

(30) Priorität: 14.06.2004 DE 102004028447
(43) Veröffentlichungstag der Anmeldung: 21.12.2005
(73) Patentinhaber: Wilhelm Karmann GmbH, 49084 Osnabrück (DE)
(72) Erfinder: Müller, Meik, 47226 Duisburg (DE); Kamphaus, Jürgen, 47059 Duisburg (DE)

(56) Entgegenhaltungen:
- EP-A- 0 970 834
- DE-A1- 19 714 105
- DE-C1- 4 445 941
- US-A- 6 053 559
- US-A1- 2003 227 189
- US-B1- 6 520 561

## Beschreibung

Die Erfindung betrifft eine Abdeckeinheit mit einem verschwenkbaren Verdeckkastendeckel für einen Verdeckkasten eines Fahrzeugs, der zur Aufnahme eines zwischen einer den Innenraum des Fahrzeugs überdeckenden Schließstellung und einer den Innenraum freigebenden Staustellung verstellbaren Fahrzeugdachs ausgebildet ist, wobei die Abdeckeinheit derart mit dem Fahrzeugdach verbindbar ausgebildet ist, dass der Verdeckkastendeckel beim Verstellen des Fahrzeugdachs zwischen der Staustellung und der Schließstellung zwischen einer den Verdeckkasten verschließenden Ruheposition und einer den Verdeckkasten freigebenden Öffnungsposition verschwenkt wird.

Bei Fahrzeugen mit verstellbaren Fahrzeugdächern ist es erforderlich, das sich in der Staustellung in dem im rückwärtigen Fahrzeugbereich angeordneten Verdeckkasten befindliche Fahrzeugdach, durch einen Verdeckkastendeckel abzudecken.

Bekannte Abdeckeinheiten der eingangs genannten Art weisen dazu einen verschwenkbaren Verdeckkastendeckel auf, der durch eine mit der Abdeckeinheit gekoppelte Antriebseinheit angetrieben wird.

Ein wesentlicher Nachteil dieser Abdeckeinheiten besteht darin, daß die Verwendung einer separaten Antriebseinheit für die Abdeckeinheit eine Erhöhung der Herstellungskosten sowie einen erhöhten Platzbedarf bedingt. Um Kollisionen zwischen dem Verdeckkastendeckel und dem Fahrzeugdach während der Öffnungs- und Schließbewegung des Fahrzeugdachs zu vermeiden, ist es ferner erforderlich, eine mit mehreren Sensoren verbundene teure Regelungseinheit zu verwenden, die gewährleistet, daß die Schwenkbewegung des Verdeckkastendeckels an die Position und Bewegungen des Fahrzeugdachs angepaßt wird.

Der Erfindung liegt die Aufgabe zugrunde, eine Abdeckeinheit bereitzustellen, die einen geringen Raumbedarf aufweist und sich kostengünstig herstellen läßt.

Die Erfindung löst die Aufgabe durch eine Abdeckeinheit gemäß Anspruch 1. Vorteilhafte Weiterbildungen der Erfindung sind in den abhängigen Ansprüchen angegeben.

Die erfindungsgemäße Abdeckeinheit ist dadurch gekennzeichnet, daß sie derart mit dem Fahrzeugdach verbindbar ausgebildet ist, daß der Verdeckkastendeckel beim Verstellen des Fahrzeugdachs zwischen der Staustellung und der Schließstellung zwischen einer den Verdeckkasten verschließenden Ruheposition und einer den Verdeckkasten freigegebenen Öffnungsposition durch Zusammenwirken eines das Fahrzeugdach tragenden Dachgestänges mit der Abdeckeinheit zwangsgesteuert. verschwenkt wird.

Gemäß der Erfindung wird die mit dem Fahrzeugdach verbundene Abdeckeinheit durch die Bewegung des Fahrzeugdachs beim Verschwenken zwischen der Schließstellung und der Staustellung angetrieben, so daß auf einen eigenen Antrieb für die Abdeckeinheit verzichtet werden kann.

Die Abdeckeinheit kann im Falle eines durch eine Antriebseinheit angetriebenen Fahrzeugdachs direkt mit der Antriebseinheit verbunden werden. Es besteht jedoch auch die Möglichkeit, die Abdeckeinheit mechanisch mit einzelnen oder mehreren Elementen des Fahrzeugdachs, beispielsweise des Dachgestänges des Fahrzeugdachs zu verbinden, so daß auch manuell betriebene Fahrzeugdächer mit der erfindungsgemäßen Abdeckeinheit kombiniert werden können.

Die Verbindung zwischen dem Fahrzeugdach und der Abdeckeinheit ist dabei so ausgestaltet, daß der Schwenkweg des Verdeckkastendeckels nicht mit dem Schwenkweg des Fahrzeugdachs kollidiert. In Abhängigkeit von der Ausgestaltung des Fahrzeugs und des Verdeckkastens ist es dabei möglich, die Bewegungen des Verdeckkastendeckels in erforderlicher Weise anzupassen.

Befindet sich der Verdeckkastendeckel nur in der Staustellung des Fahrzeugdachs in einer Ruheposition, in der er auf dem Verdeckkasten aufliegt und in der Schließstellung befindet er sich in einer den Verdeckkasten freigebenden Öffnungsposition, dann wird der Verdeckkastendeckel beim vollständigen Verschwenken des Fahrzeugdachs nur zwischen der Ruheposition und der Öffnungsposition verschwenkt.

Falls sich der Verdeckkastendeckel jedoch sowohl in der Schließstellung als auch in der Staustellung in der Ruheposition befindet und nur zwischenzeitlich die Öffnungsposition durchläuft, dann wird der Verdeckkastendeckel beim Verschwenken des Fahrzeugdachs entsprechend verschwenkt.

Die erfindungsgemäße Ausgestaltung der Abdeckeinheit erlaubt es, auf einen teuren und sowohl gewichtserhöhenden als auch bauraumbeanspruchenden eigenen Antrieb für die Abdeckeinheit zu verzichten. Überdies kann bei der erfindungsgemäßen Ausbildung der Verbindung auf separate Regelungs- und Überwachungseinrichtungen verzichtet werden, die die Bewegungen des Verdeckkastendeckels in Abhängigkeit von der Position des Fahrzeugdachs überwachen und koordinieren.

Insgesamt zeichnet sich die erfindungsgemäße Abdeckeinheit somit dadurch aus, daß diese gegenüber bekannten Abdeckeinheiten kostengünstiger ist und einen geringeren Bauraum sowie geringeres Baugewicht beansprucht.

Gemäß der Erfindung ist an der Abdeckeinheit eine den Verdeckkastendeckel verschwenkende Steuereinheit angeordnet, die mit dem Dachgestänge des sich zwischen der Schließstellung und der Staustellung bewegenden Fahrzeudachs in Eingriff bringbar ist.

In der Einbaulage der Abdeckeinheit an dem Fahrzeug überträgt die mit dem Dachgestänge zusammenwirkende Steuereinheit die Bewegungen des Fahrzeugdachs auf den Verdeckkastendeckel. Unabhängig von der anderweitigen Ausgestaltung der Abdeckeinheit kann somit eine Anpassung der Abdeckeinheit an den jeweiligen Fahrzeugtyp allein durch eine Anpassung der Steuereinheit vorgenommen werden, wobei die Ausgestaltung der Steuereinheit den Bewegungsablauf des Verdeckkastendeckels bestimmt.

Ferner erlaubt die Verbindung der Steuereinheit mit dem Dachgestänge auch die Verwendung derart weitergebildeter Abdeckeinheiten mit solchen Fahrzeugdächern, die von Hand geöffnet und geschlossen werden und keinen eigenen Antrieb aufweisen. Auf eine andernfalls zusätzliche erforderliche manuelle Öffnung und Schließung des Verdeckkastendeckels kann somit auch in diesem Fall verzichtet werden, da der Verdeckkastendeckel durch die Schwenkbewegungen des Fahrzeugdachs zwangsgesteuert wird.

Die Ausgestaltung der Steuereinheit kann dabei in beliebiger Weise erfolgen und ermöglicht somit eine optimale Anpassung an die konstruktiven Vorgaben des Fahrzeuges. Dabei kann die Umsetzung der Bewegungen des Fahrzeugdachs in der Steuereinheit grundsätzlich in beliebiger Weise erfolgen. Nach einer weiteren Ausgestaltung der Erfindung weist die Steuereinheit jedoch ein mit dem Dachgestänge in Eingriff bringbares und verschiebbares Steuerelement auf, das linear verschiebbar ist und die Bewegungen des Fahrzeugdachs auf den Verdeckkastendeckel überträgt.

Die Verwendung eines derartigen Steuerelements, dessen Form und Abmessung an das Dachgestänge, bzw. an die Streben des Dachgestänges angepaßt sind, die mit dem Steuerelement in Eingriff stehen, erlaubt es in besonderer Weise, die Bewegungen des Fahrzeugdachs auf die Abdeckeinheit zu übertragen. Da dabei im wesentlichen die linear verlaufenden Bewegungen des Dachgestänges direkt in eine entsprechende lineare Bewegung des Steuerelements umgesetzt werden, können Komplikationen, wie sie möglicherweise bei einer Übersetzung oder Umwandlung der linearen Bewegung des Dachgestänges auftreten können, vermieden werden.

Gegebenenfalls erforderliche Übersetzungen der Bewegungen können aber, sofern sie erforderlich sind, innerhalb der Abdeckeinheit durch eine entsprechende Übersetzung oder Umwandlung der linearen Bewegung des Steuerelements erfolgen, wobei hierbei grundsätzlich alle Arten von Getrieben, beispielsweise Räder- oder Hebelgetriebe, verwendbar sind.

Um in ergänzender Weise Störungen bei der Bewegung des Steuerelements, das nach einer Weiterbildung als Kulissenstein ausgebildet ist, vorzubeugen, ist nach einer weiteren Ausgestaltung der Erfindung der Kulissenstein an einer Führungsstange verschiebbar gelagert. Die Führungsstange, die vorzugsweise an der Steuereinheit angeordnet ist, verhindert dabei besonders zuverlässig ein Verkanten des als Kulissenstein ausgebildeten Steuerelements während des Zusammenwirkens mit dem Dachgestänge. Ferner kann über die Länge der Führungsstange eine Beschränkung der Bewegung des Kulissensteins erreicht werden, wobei jedoch ggf. gewährleistet werden muß, daß es nicht zu ungewollten Verspannungen des Dachgestänges kommt.

Die Übertragung der Bewegung innerhalb der Abdeckeinheit kann, wie bereits dargelegt, in beliebiger Weise erfolgen. Nach einer weiteren Ausgestaltung der Erfindung ist der Kulissenstein jedoch mit einem Bowdenzug verbunden, der die Bewegungen des Kulissensteins auf den Verdeckkastendeckel überträgt. Der Bowdenzug ist vorzugsweise an seinem dem Kulissenstein gegenüberliegenden Ende mit einem Ende eines einen Träger zur Aufnahme des Verdeckkastendeckels aufweisenden Schwenkhebels verbunden.

Verschiebungsbewegungen des Kulissensteins in Folge des Zusammenwirkens mit dem Dachgestänge werden somit unmittelbar auf den auf dem Träger angeordneten Verdeckkastendeckel übertragen. Der Abstand des Befestigungspunktes des Bowdenzuges an dem Schwenkhebel von dessen Drehachse an der Abdeckeinheit bestimmt dabei den Schwenkwinkel in Abhängigkeit von der linearen Verschiebung des Kulissensteins.

Die Verwendung eines Bowdenzugs zur Übertragung der linearen Bewegung des Kulissensteins in eine Schwenkbewegung des Trägers, bzw. des darauf angeordneten Verdeckkastendeckels, stellt dabei eine besonders einfache, kostengünstige und zuverlässige Möglichkeit dar, die Bewegungen des Fahrzeugdaches mit dem Verdeckkastendeckel zu koppeln. Die Möglichkeit, durch unterschiedliche Anordnung des Bowdenzuges am Schwenkhebel den Schwenkwinkel an die lineare Verschiebebewegung anzupassen, erleichtert dabei in besonderer Weise die Anpassung der zu kombinierenden Bewegungen.

Nach einer weiteren Ausführungsform der Erfindung ist an der Steuereinheit, vorzugsweise an der Führungsstange, eine Rückstellfeder derart angeordnet, daß der Kulissenstein vorgespannt ist. Die Vorspannung, die den Kulissenstein besonders einfach und sicher in der Lage an der Steuereinheit sichert, in der sich dieser nicht mit dem Fahrzeugdach bzw. dem Dachgestänge in Eingriff befindet, sichert besonders zuverlässig die entsprechende Position des Verdeckkastendeckels. In Abhängigkeit von den konstruktiven Vorgaben kann dies die den Verdeckkasten abdeckende oder den Verdeckkasten freigebende Position sein.

Nachstehend wird ein Ausführungsbeispiel der Erfindung anhand der Zeichnungen näher erläutert. In den Zeichnungen zeigen:
- Fig. 1: eine Draufsicht auf ein Fahrzeug mit einem sich in der Schließstellung befindlichen Fahrzeugdach;
- Fig. 2: eine Draufsicht auf das Fahrzeug von Fig. 1 mit dem sich in der Staustellung befindlichen Fahrzeugdach;
- Fig. 3: eine Seitenansicht einer an einem Dachgestänge angeordneten Abdeckeinheit in einer Position, in der sich die Abdeckeinheit nicht mit dem Dachgestänge im Eingriff befindet;
- Fig. 4: eine Seitenansicht der Abdeckeinheit und des Dachgestänges von Fig. 4 in einer sich im Eingriff befindlichen Position;
- Fig. 5: eine Vorderansicht des Dachgestänges und der Abdeckeinheit in der in Fig. 3 dargestellten Position;
- Fig. 6: eine Vorderansicht des Dachgestänges und der Abdeckeinheit in der in Fig. 4 dargestellten Position;
- Fig. 7: eine Darstellung des Einzelteils A von Fig. 5;
- Fig. 8: eine Darstellung des Einzelteils B von Fig. 6;
- Fig. 9: eine Seitenansicht der Abdeckeinheit von Fig. 1 in der nicht mit dem Dachgestänge in Eingriff befindlichen Position und
- Fig. 10: eine Seitenansicht der Abdeckeinheit von Fig. 9 in einer sich mit dem Dachgestänge in Eingriff befindlichen Position.

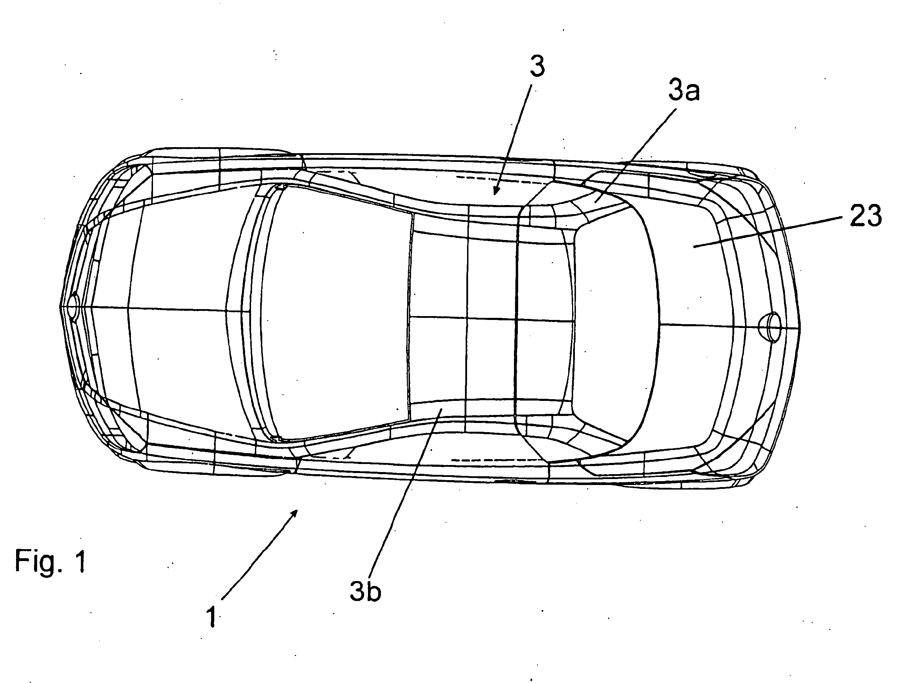

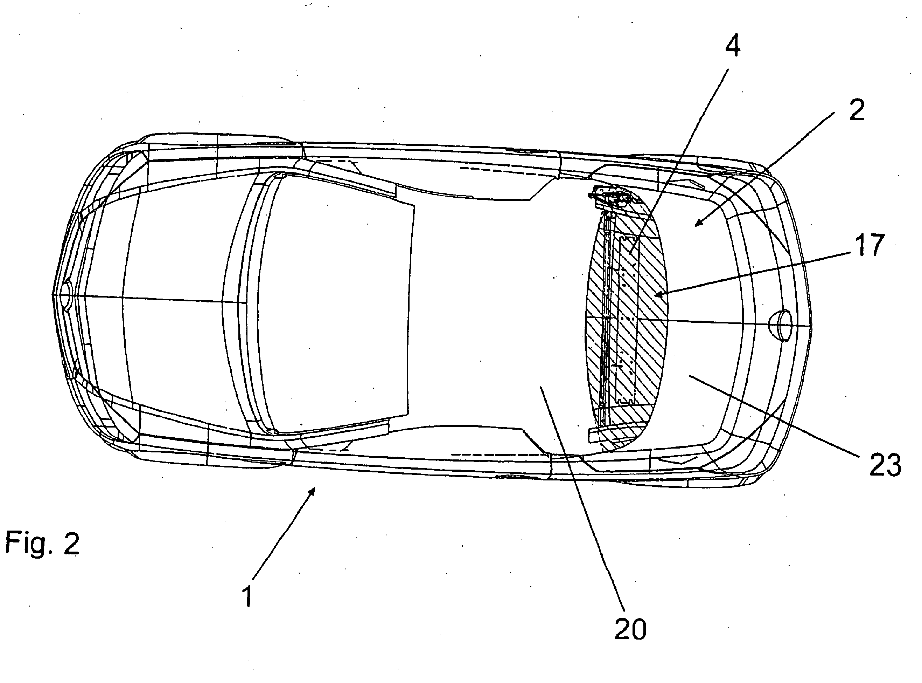

Fig. 1 zeigt eine Ausführungsform eines Fahrzeuges 1 mit einem sich in einer den Innenraum 20 überdeckenden Schließstellung befindlichen verstellbaren Fahrzeugdach 3, welches bei diesem Fahrzeug 1 zweigeteilt ist, d.h. einen hinteren Dachrahmen 3a und ein Dachsegment 3b aufweist und durch einen Schwenkmechanismus in den teilweise als Verdeckkasten 2 fungierenden Kofferraum unterhalb des Kofferraumdeckels 23 abgelegt werden kann (vgl. Fig. 2).

In Fig. 2 ist das Fahrzeug 1 mit dem sich in einer Staustellung befindlichen Fahrzeugdach 3 dargestellt, so daß der Innenraum 20 freigegeben ist. Das abgelegte Fahrzeugdach 3 wird zum Teil durch den Kofferraumdeckel 23 abgedeckt. In einem Bereich zwischen dem Innenraum 20 und dem Kofferraumdeckel 23, der im geschlossen Zustand durch den hinteren Dachrahmen ausgefüllt wird, ragt jedoch ein Teil des abgelegten Fahrzeugdachs 3 hervor, das durch einen auf einem Träger 4 einer Abdeckeinheit 17 angeordneten, hier nicht dargestellten Verdeckkastendeckel abgedeckt werden kann.

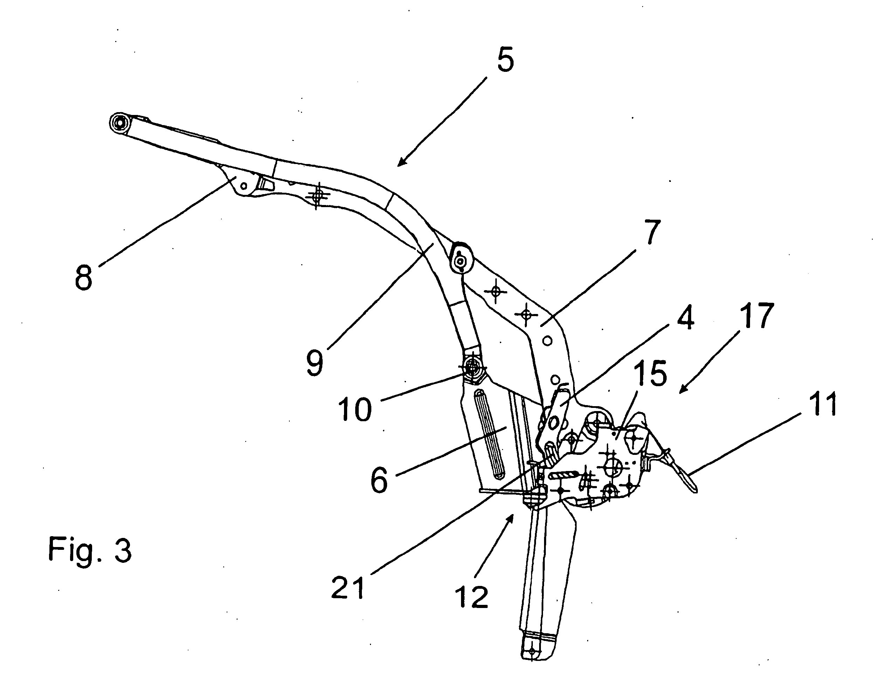

Die Schwenkbewegung des Verdeckkastendeckels wird durch das Zusammenwirken des das Fahrzeugdach 3 tragenden Dachgestänges 5 mit der Abdeckeinheit 17 zwangsgesteuert. Dazu weist die Abdeckeinheit 17 eine Steuereinheit 12 auf, die bei entsprechender Anordnung der Abdeckeinheit 17 an einer fest eingebauten Konsole 6 des Dachgestänges 5 mit dem Dachgestänge 5 in Eingriff bringbar ist und die Bewegungen des Fahrzeugdachs 3 beim Öffnen und Schließen auf die Abdeckeinheit 17 überträgt (vgl. Fig. 3-6).

Das Dachgestänge 5 ist vereinfacht dargestellt ein Viergelenkscharnier. Es besteht aus der im Fahrzeug 1 fest eingebauten Konsole 6, der hinteren Dachstrebe 7, an der der hintere Dachrahmen 3a mit einer dort angeordneten Heckscheibe montiert ist, der vorderen Dachstrebe 8, an der das Dachsegment 3b befestigt ist und dem Steuerhebel 9, der die Lage des hinteren Dachrahmens 3a und des Dachsegments 3b zueinander steuert.

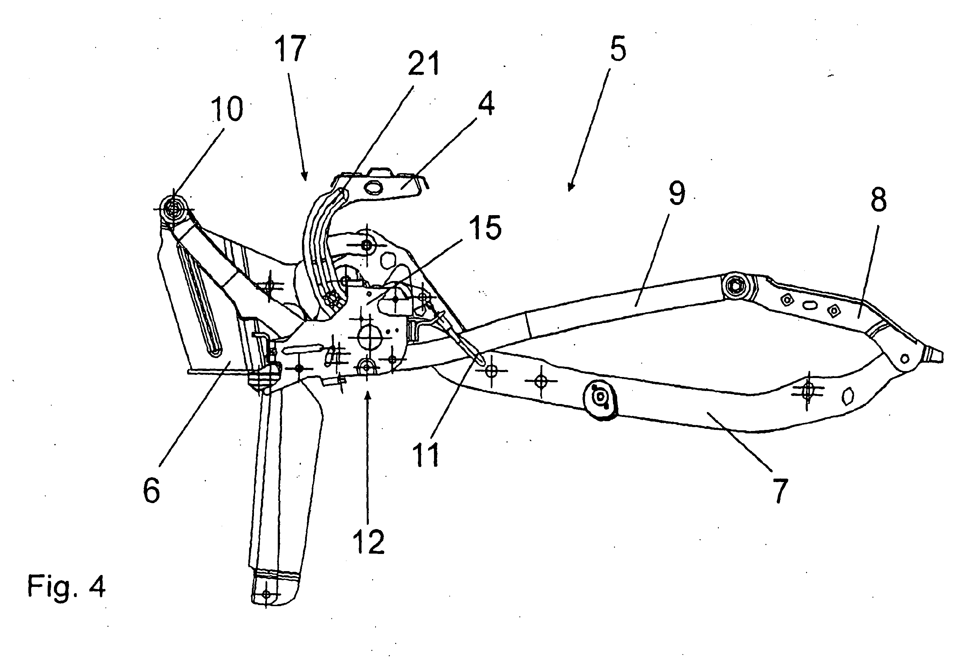

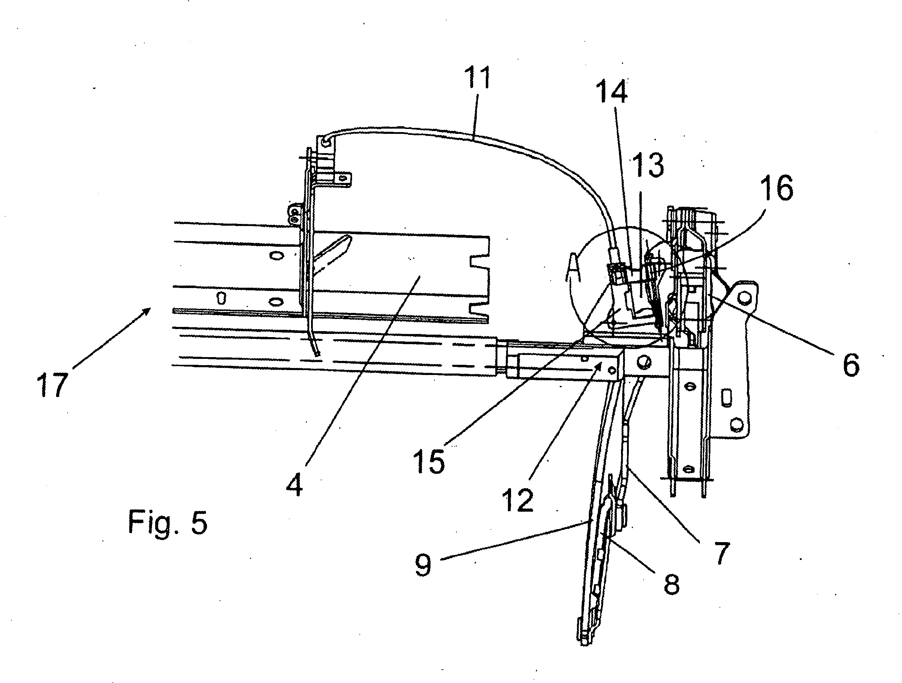

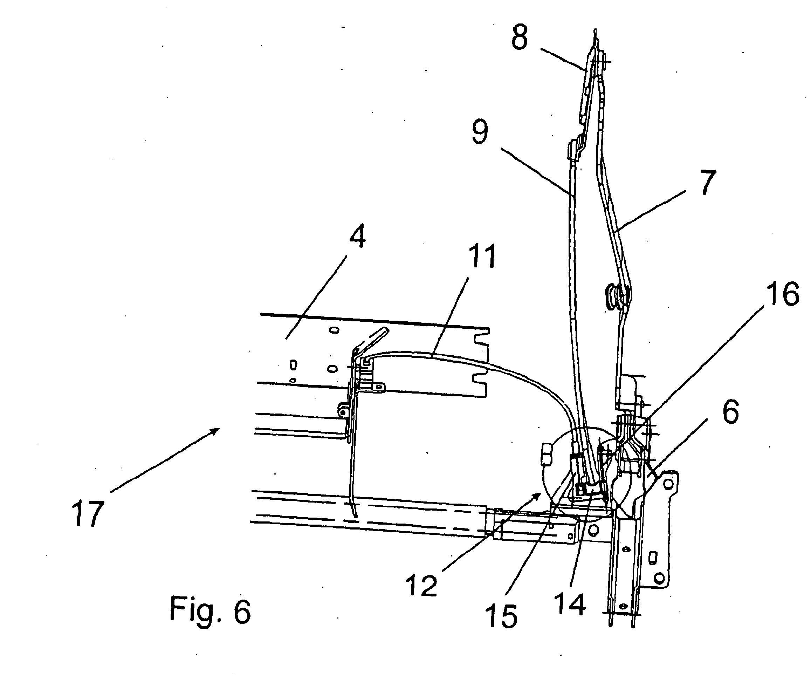

Bei der Bewegung des Fahrzeugdachs 3 wird das Dachgestänge 5 zwischen der in Fig. 3 und Fig. 5 dargestellten Schließstellung und der in Fig. 4 und Fig. 6 dargestellten Staustellung bewegt, wobei der Steuerhebel 9 um seine Lagerachse 10 an der Konsole 6 verschwenkt wird. Dabei kommt der Steuerhebel 9 mit der Steuereinheit 12 in Eingriff, die im Schwenkbereich des Steuerhebels 9 angeordnet ist.

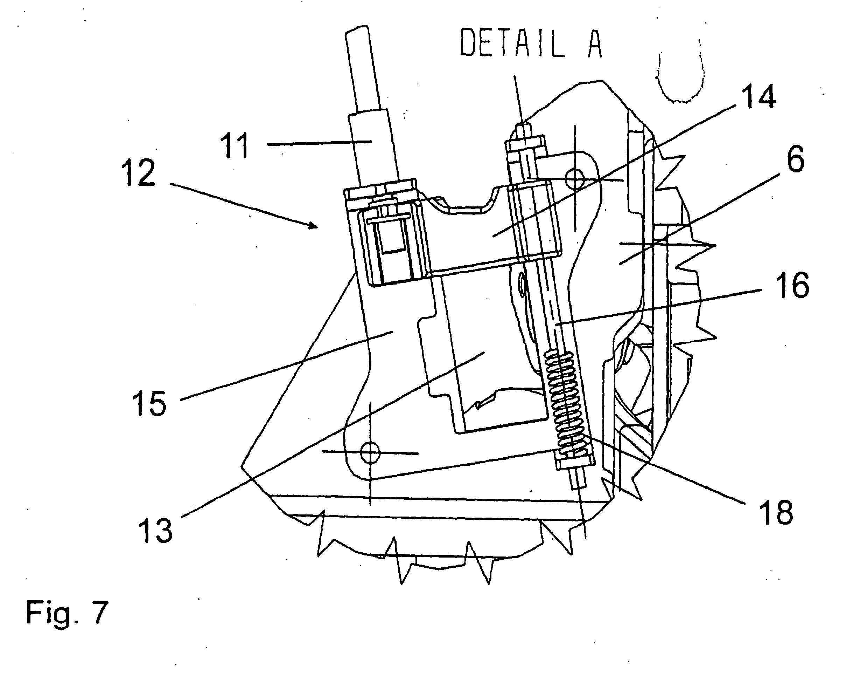

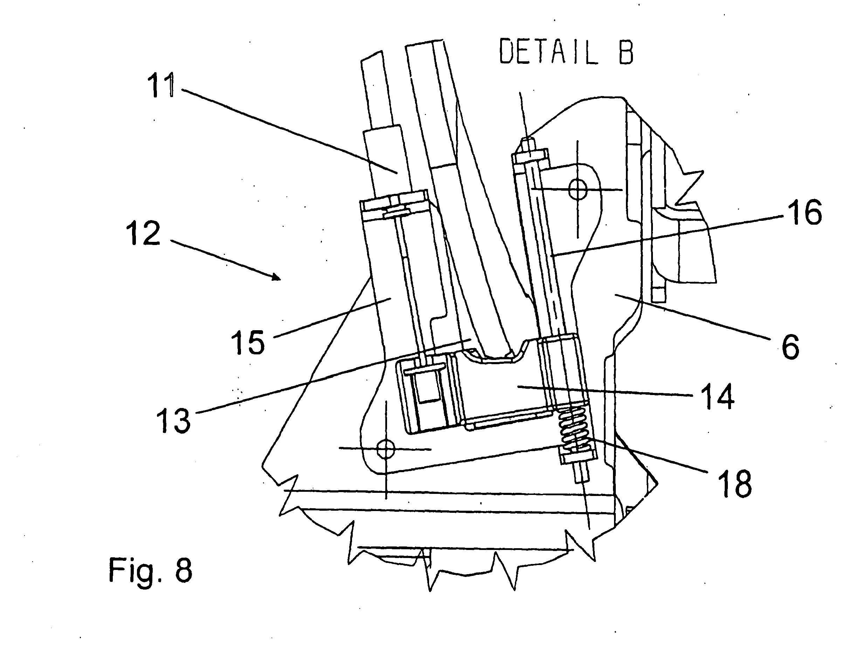

Beim Eingriffsvorgang, d.h. beim Öffnen des Fahrzeugdachs 3, kommt der Steuerhebel 9 mit einem längs einer Führungsstange 16 verschiebbar an der Steuereinheit 12 angeordneten Kulissenstein 14 in Eingriff, der in einer U-förmigen Aussparung 13 der Steuereinheit 12 angeordnet ist (vgl. Fig. 7 und Fig. 8).

Durch die Beendigung der Schwenkbewegung beim Öffnen des Fahrzeugdachs 3 wird der Kulissenstein 14 durch den Steuerhebel 9 weiter in Richtung auf den Grund der Aussparung 13 verschoben, bis das Fahrzeugdach 3 vollständig geöffnet ist und im Kofferraum bzw. Verdeckkasten 2 abgelegt ist. Eine auf der Führungsstange 16 angeordnete Spiralfeder 18 spannt den Kulissenstein 14 in dieser Position in Richtung auf den Steuerhebel 9 vor und unterstützt so die Schwenkbewegung des Fahrzeugdachs 3 beim Schließen des Fahrzeugdachs 3.

Die Bewegungen des Kulissensteins 14 werden durch einen Bowdenzug 11, der an einem Trägerblech 15 der Steuereinheit 12 abgestützt ist und mit dem Kulissenstein 14 verbunden ist, auf einen gelenkig an einer Lagerachse 22 der Abdeckeinheit 17 gelagerten Schwenkhebel 21 übertragen. Der Bowdenzug 11, der an seinem der Steuereinheit 12 gegenüberliegenden Ende dazu an der Abdeckeinheit 17 abgestützt ist, ist dazu mit einem dem Kulissenstein 14 gegenüberliegenden Ende mit einem ersten Ende des Schwenkhebels 21 verbunden, der an seinem zweiten Ende einen Träger 4 zur Aufnahme des hier nicht dargestellten Verdeckkastendeckels aufweist.

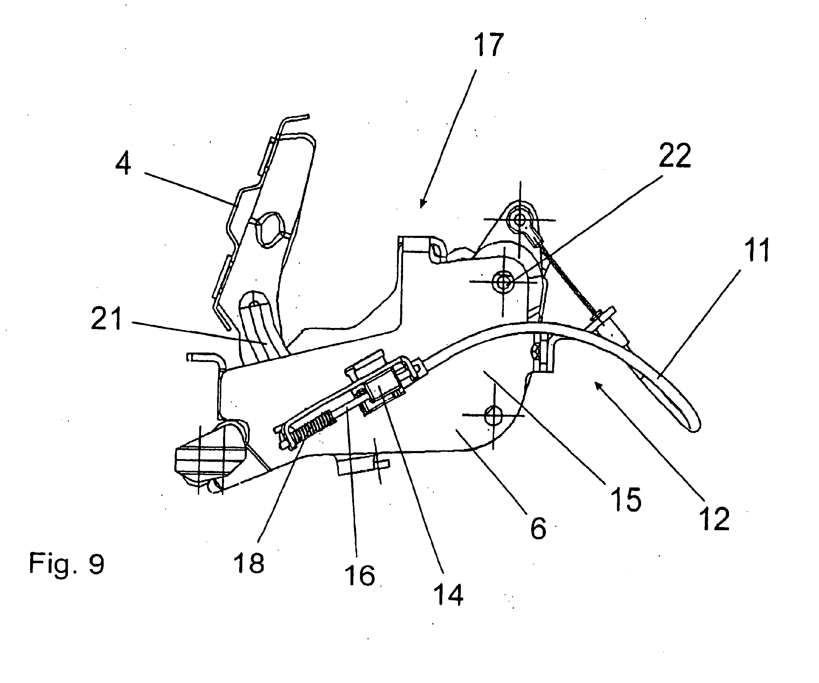

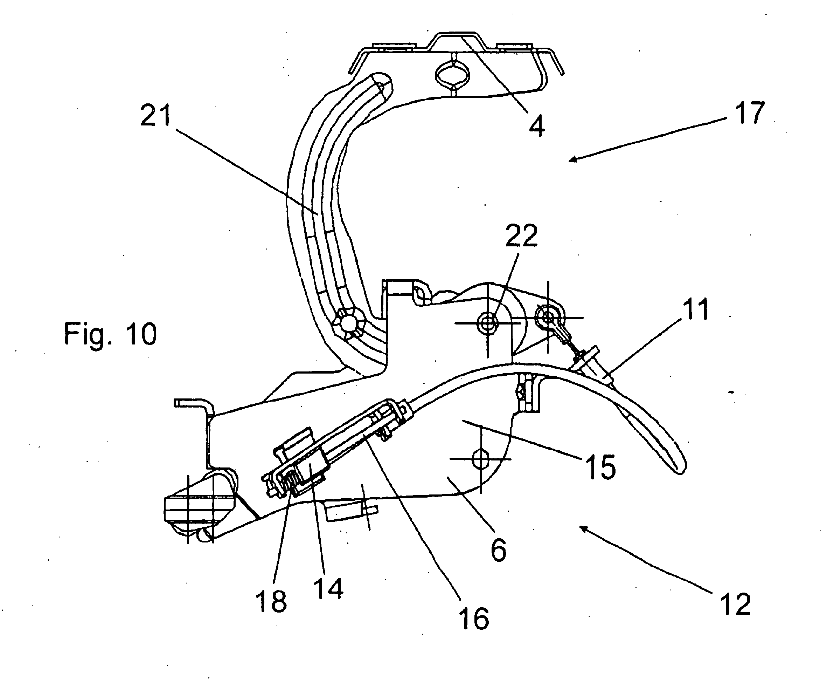

Der Abstand des Verbindungspunktes des Bowdenzuges 11 an dem ersten Ende des Schwenkhebels 21 von dem Gelenkpunkt 22 bestimmt dabei den Schwenkwinkel des Trägers 4 in Abhängigkeit von der Längsverschiebung des Kulissensteins 14 (vgl. Fig. 9 und Fig. 10).

## Patentansprüche

1. Abdeckeinheit mit einem verschwenkbaren Verdeckkastendeckel für einen Verdeckkasten eines Fahrzeugs, der zur Aufnahme eines zwischen einer den Innenraum des Fahrzeugs überdeckenden Schließstellung und einer den Innenraum freigebenden Staustellung verstellbaren Fahrzeugdachs ausgebildet ist,
**dadurch gekennzeichnet,**
**daß** die Abdeckeinheit (17) derart mit dem Fahrzeugdach (3) verbindbar ist, daß der Verdeckkastendeckel beim Verstellen des Fahrzeugdachs (3) zwischen der Staustellung und der Schließstellung zwischen einer den Verdeckkasten (2) verschließenden Ruheposition und einer den Verdeckkasten (2) freigebenden Öffnungsposition durch Zusammenwirken eines das Fahrzeugdach (3) tragenden Dachgestänges (5) mit einem dafür vorgesehenen Mittel (12) der Abdeckeinheit (17) zwangsgesteuert verschwenkt wird.

2. Abdeckeinheit nach Anspruch 1, **gekennzeichnet durch** eine den Verdeckkastendeckel verschwenkende Steuereinheit (12), die mit dem Dachgestänge (5) des sich zwischen der Schließstellung und der Staustellung bewegenden Fahrzeugdachs (3) in Eingriff bringbar ist.

3. Abdeckeinheit nach Anspruch 1 oder 2, **dadurch gekennzeichnet, dass** die Steuereinheit (12) ein mit dem Dachgestänge (5) in Eingriff bringbares und verschiebbares Steuerelement (14) aufweist, dass die Bewegung des Fahrzeugdachs (3) auf den Verdeckkastendeckel überträgt.

4. Abdeckeinheit nach Anspruch 3, **dadurch gekennzeichnet, dass** das Steuerelement als Kulissenstein (14) ausgebildet ist, der an einer Führungsstange (16) der Steuereinheit (12) verschiebbar gelagert ist.

5. Abdeckeinheit nach Anspruch 4, **dadurch gekennzeichnet, dass** der Kulissenstein (14) mit einem Bowdenzug (11) verbunden ist, der die Bewegungen des Kulissensteins (14) auf den Verdeckkastendeckel überträgt.

6. Abdeckeinheit nach Anspruch 5, **dadurch gekennzeichnet, daß** der Bowdenzug (11) an seinem dem Kulissenstein (14) gegenüberliegenden Ende mit einem Ende eines einen Träger (4) zur Aufnahme des Verdeckkastendeckels aufweisenden Schwenkhebels (21) verbunden ist.

7. Abdeckeinheit nach Anspruch 6, **dadurch gekennzeichnet, dass** an der Steuereinheit (12), insbesondere an der Führungsstange (16) eine Rückstellfeder (18) derart angeordnet ist, daß der Kulissenstein (14) vorgespannt ist.

## Claims

1. A covering unit comprising a pivotable convertible top box cover for a convertible top box of a vehicle, which convertible top box is adapted to receive a vehicle top that is adjustable between a closed position covering the interior of the vehicle and a stowed position in which the interior of the vehicle is open,
**characterized in that**
the covering unit (17) is adapted to be connectable with the vehicle top (3) such that the convertible top box cover is pivoted between a rest position in which the convertible top box (2) is closed, and an open position in which the convertible top box (2) is uncovered by cooperation of a top lever (5) supporting the vehicle top (3) with a means (12) of the covering unit (17) provided therefore, when displacing the vehicle top (3) between the stowed position and the closed position.

2. Covering unit according to claim 1, **characterized in that** a control unit (12) pivots the convertible top box cover and is engageable with the top lever (5) of the vehicle top (3), which moves between the closed position and the stowed position.

3. Covering unit according to any one of claims 1 through 2, **characterized in that** the control unit (12) comprises a slidable control element (14) engageable with the top lever (5), which control element (14) transmits the movement of the vehicle top (3) to the convertible top box cover.

4. Covering unit according to claim 3, **characterized in that** the control element is formed as a sliding block (14) slidingly supported on a guiding rod (16) of the control unit (12).

5. Covering unit according to claim 4, **characterized in that** the sliding block (14) is connected to a Bowden cable (11), which transmits the movement of the sliding block (14) to the convertible top box cover.

6. Covering unit according to claim 5, **characterized in that** an end of the Bowden cable (11) opposite to the sliding block (14) is connected to an end of a pivot lever (21), which comprises a beam (4) for receiving the convertible top box cover.

7. Covering unit according to claim 6, **characterized in that** a return spring (18) is arranged on the control unit (12), particularly on the guide rod (16), such that the sliding block (14) is biased.

## Revendications

1. Unité de recouvrement comprenant un couvercle de logement de capote pivotant pour un logement de capote d'un véhicule qui est destiné à recevoir un toit de véhicule déplaçable entre une position de fermeture recouvrant l'intérieur du véhicule et une position de rangement dégageant l'intérieur,
**caractérisée en ce que**
l'unité de recouvrement (17) peut être raccordée au toit de véhicule (3) de sorte que le couvercle de logement de capote soit articulé par commande forcée lors du déplacement du toit de véhicule (3) entre la position de rangement et la position de fermeture, entre une position de repos fermant le logement de capote et une position d'ouverture dégageant le logement de capote (2), par coopération d'une tringlerie de toit (5) portant le toit de véhicule (3) avec des moyens (12) de l'unité de recouvrement (17) prévus à cet effet.

2. Unité de recouvrement selon la revendication 1, **caractérisée en ce qu'**une unité de commande (12) faisant pivoter le couvercle de logement de capote peut être amenée en prise avec la tringlerie (5) du toit de véhicule (3) se déplaçant entre la position de fermeture et la position de rangement.

3. Unité de recouvrement selon la revendication 1 ou 2, **caractérisée en ce que** l'unité de commande (12) présente un élément de commande (14) qui peut être amené en prise et déplacé avec la tringlerie de toit (5) de manière à transmettre le déplacement du toit de véhicule (3) au couvercle de logement de capote.

4. Unité de recouvrement selon la revendication 3, **caractérisée en ce que** l'élément de commande se présente sous la forme d'un coulisseau (14) qui est monté à coulissement sur une tige de guidage (16) de l'unité de commande (12).

5. Unité de recouvrement selon la revendication 4, **caractérisée en ce que** le coulisseau (14) est raccordé à un câble Bowden (11) qui transmet les déplacements du coulisseau (14) au couvercle de logement de capot.

6. Unité de recouvrement selon la revendication 5, **caractérisée en ce que** le câble Bowden (11) est raccordé, à son extrémité opposée au coulisseau (14), à une extrémité d'un levier pivotant (21) présentant un support (4) pour recevoir le couvercle de logement de capote.

7. Unité de recouvrement selon la revendication 6, **caractérisée en ce que** l'unité de commande (12), en particulier la tige de guidage (16), présente un ressort de rappel (18) agencé de sorte que le coulisseau (14) soit précontraint.
